# DEMANDE DE BREVET EUROPEEN

(11) **EP 3 872 370 A1**
(43) Date de publication de la demande: **01.09.2021**
(21) Numéro de dépôt: 21159498.1
(22) Date de dépôt: 26.02.2021
(51) Int. Cl.: F16H 57/04, B60K 17/34, B60K 17/36

(54) **ORGANE DE TRANSMISSION DE MOUVEMENT DESTINÉ À ÊTRE MONTÉ SUR UN VÉHICULE AUTOMOBILE ET VÉHICULE AUTOMOBILE COMPRENANT UN TEL ORGANE DE TRANSMISSION DE MOUVEMENT**

(30) Priorité: 27.02.2020 FR 2001945
(71) Demandeur: Arquus, 78000 Versailles (FR)
(72) Inventeur: MOMAL, Pascal, 78140 VELIZY VILLACOUBLAY (FR); COHEN, Stéphane, Jérôme, 78650 BEYNES (FR)
(74) Mandataire: Lavoix

(57) **Abrégé**

Cet organe de transmission de mouvement (5) est destiné à être monté sur un véhicule et à relier un pont (6) du véhicule et un arbre d'entraînement (12) du véhicule. L'organe de transmission de mouvement comprend une bride d'entrée (10) destinée à être reliée à l'arbre d'entraînement (12) du véhicule. Selon l'invention, l'organe de transmission de mouvement (5) comprend une bride d'interface (14) comprenant un ventilateur (144), la bride d'interface étant destinée à être fixée à la bride d'entrée (10) et interposée entre l'arbre d'entraînement (12) et la bride d'entrée (10), de sorte que, lorsque la bride d'entrée est reliée à l'arbre d'entraînement (12), le ventilateur tourne avec une vitesse de rotation proportionnelle à la vitesse d'avancement du véhicule.

## Description

La présente invention concerne un organe de transmission de mouvement destiné à être monté sur un véhicule automobile. La présente invention concerne également un véhicule automobile comprenant un tel organe de transmission de mouvement.

Il est connu, notamment dans le domaine des véhicules automobiles tout-terrain, d'intégrer un pont mécanique assurant la liaison entre deux roues d'un essieu et un arbre d'entraînement. La liaison entre le pont et l'arbre d'entraînement est effectuée au moyen d'un organe de transmission de mouvement. Le pont a pour fonction de transmettre un couple fourni par le groupe moto propulseur du véhicule aux deux roues qu'il relie.

Le pont est rempli, en partie, d'huile et est entouré d'un caisson pour éviter l'altération des éléments du pont lors de trajets dans des environnements divers tels que du sable ou de la boue. Le caisson tend à limiter les échanges thermiques entre l'huile du pont et l'air extérieur. En cas d'utilisation du véhicule par température élevée, l'huile contenue dans le pont risque de chauffer rapidement jusqu'à des températures au-delà desquelles elle est altérée, par exemple 160°C.

Il est également connu de WO 2013/135531 A1 de relier un arbre d'entraînement à un réducteur par l'intermédiaire d'un accouplement et d'intégrer un ventilateur à un tel accouplement, le ventilateur étant entraîné en rotation par l'arbre d'entraînement. Un tel ventilateur permet alors de refroidir le réducteur. Cependant, une telle solution présente l'inconvénient d'être difficile à mettre en œuvre, du fait de la complexité de fabrication d'un accouplement comprenant un ventilateur. En outre, une telle solution rend complexe l'ajout d'un ventilateur à un véhicule n'ayant pas été fabriqué avec un accouplement comprenant un ventilateur, car un tel ajout nécessite la modification de pièces existantes d'un tel véhicule et notamment de l'accouplement.

C'est à cet inconvénient qu'entend plus particulièrement remédier l'invention en proposant un organe de transmission de mouvement permettant de garder l'huile à une température admissible et pouvant être plus facilement installé sur un véhicule.

A cet effet, l'invention concerne un organe de transmission de mouvement, destiné à être monté sur un véhicule et à relier un pont du véhicule et un arbre d'entraînement du véhicule, l'organe de transmission de mouvement comprenant une bride d'entrée destinée à être reliée à l'arbre d'entraînement du véhicule. Selon l'invention, l'organe de transmission de mouvement comprend une bride d'interface comprenant un ventilateur, la bride d'interface étant destinée à être fixée à la bride d'entrée et interposée entre l'arbre d'entraînement et la bride d'entrée lorsque l'organe de transmission est monté sur le véhicule, de sorte que, lorsque la bride d'entrée est reliée à l'arbre d'entraînement, le ventilateur tourne avec une vitesse de rotation proportionnelle à la vitesse d'avancement du véhicule.

Grâce à l'invention, il est simple d'installer un ventilateur sur un véhicule pour permettre le refroidissement du pont de ce véhicule, en interposant une bride d'interface et sans devoir modifier les pièces existantes du véhicule.

Selon des aspects avantageux mais non obligatoires de l'invention un tel pont comporte une ou plusieurs des caractéristiques suivantes, prise selon toute combinaison techniquement admissible :
- La bride d'interface est fabriquée d'un seul tenant.
- la bride d'interface comprend un moyeu et le ventilateur, fixés ensemble par des moyens de fixations, préférentiellement des vis.
- Le ventilateur comprend un nombre de pales compris entre 3 et 100, de préférence entre 7 et 50, de préférence encore entre 11 et 30.
- Le nombre de pales est un nombre premier.
- Le ventilateur est en métal, préférentiellement en acier.
- Le ventilateur est en matériau polymère.
- Le ventilateur est en matériau composite, préférentiellement en polymère renforcé de fibres.

L'invention concerne également un véhicule comprenant un arbre d'entraînement et un pont, reliés par un organe de transmission de mouvement. Selon l'invention, l'organe de transmission de mouvement est tel que décrit ci-dessus.

Ce véhicule induit les mêmes avantages que ceux mentionnés ci-dessus au sujet de l'organe de transmission de l'invention.

Selon un aspect avantageux mais non obligatoire de l'invention, l'organe de transmission de mouvement et le pont sont confinés dans un caisson de protection, alors que, de préférence, l'arbre d'entraînement, le pont et l'organe de transmission de mouvement d'un tel véhicule sont disposés sous une caisse du véhicule.

L'invention sera mieux comprise et d'autres avantages de celle-ci apparaîtront plus clairement à la lumière de la description qui va suivre, d'un mode de réalisation d'un pont et d'un véhicule automobile, donnée uniquement à titre d'exemple et faite en référence aux dessins, dans lesquels :
[Fig. 1] la figure 1 est une vue de principe de côté d'un véhicule automobile muni d'un organe de transmission conforme à un premier mode de réalisation de l'invention ;
[Fig. 2] la figure 2 est une vue en perspective du détail II de la figure 1 ;
[Fig. 3] la figure 3 est une vue en perspective éclatée de certains composants du véhicule visibles à la figure 2 ; et
[Fig. 4] la figure 4 est une vue analogue à la figure 3, pour un organe de transmission conforme à un deuxième mode de réalisation.

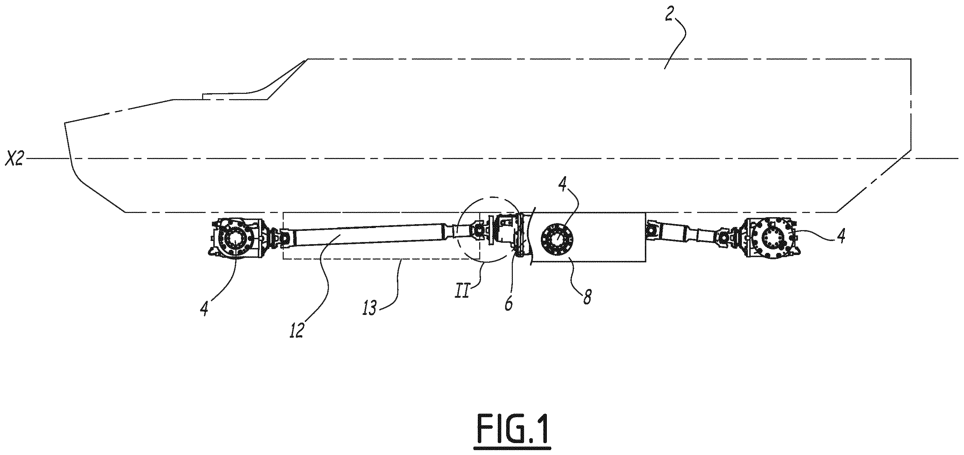

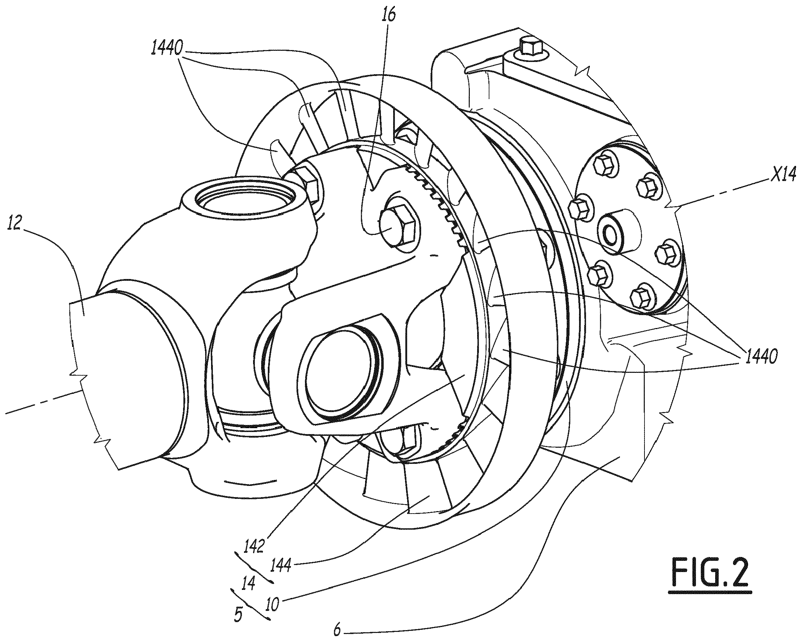

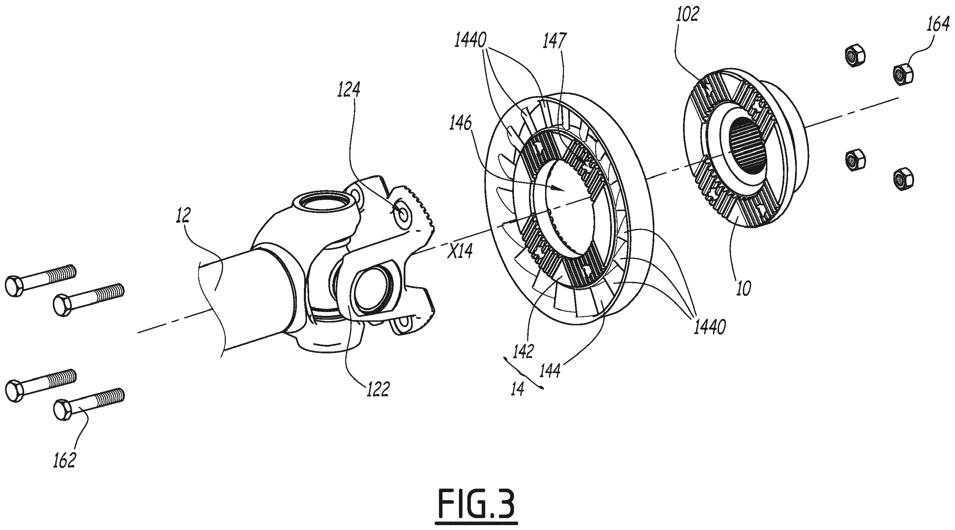

Un véhicule automobile 2 est représenté très schématiquement sur la figure 1, avec sa caisse visible en traits mixtes. Ce véhicule est, par exemple, un véhicule automobile tout-terrain, destiné à effectuer des trajets dans divers environnements, par exemple dans le désert par températures élevées ou dans la boue. Le véhicule 2 comporte plusieurs essieux 4. Par exemple, sur la figure 1, le véhicule 2 comprend trois essieux 4. Dans l'exemple de la figure 1, l'essieu central 4 inclut un organe de transmission de mouvement 5 et un pont 6. Le pont 6 et l'organe de transmission 5 sont protégés par et confinés dans un caisson 8 limitant les chocs subis par le pont 6 ou l'organe de transmission 5. Le caisson 8 est partiellement arraché à la figure 1 et, pour simplifier les figures, le caisson 8 n'est pas représenté sur les figures 2 à 5. Egalement pour simplifier la figure, les roues du véhicule 2 ne sont pas représentées.

Le pont 6, l'organe de transmission de mouvement 5 et le caisson 8 sont disposés sous la caisse du véhicule 2.

L'intérieur du pont 6 est partiellement rempli avec de l'huile.

Le véhicule 2 est prévu pour effectuer des déplacements dans des conditions de températures extrêmes, par exemple par une température de l'ordre de 50°C. Dans ces conditions, à vitesse élevée qui requiert une rotation rapide des pignons internes du pont 6, par exemple à la vitesse maximale du véhicule 2 qui est de 90km/h, l'huile présente dans le pont 6 chauffe et pourrait atteindre une température de seuil au-delà de laquelle elle serait altérée. Par exemple, cette température de seuil est de 160°C. La présence du caisson 8 empêche l'air de circuler librement autour du pont 6 et donc de refroidir efficacement l'huile présente à l'intérieur de celui-ci.

L'organe de transmission 5 comprend une bride d'entrée 10, solidaire en rotation d'un pignon d'entrée du pont 6, ce pignon d'entrée n'étant pas représenté mais connu en soi. La bride 10 est destinée à être liée à un arbre d'entraînement 12 appartenant au véhicule 2 et également disposé sous la caisse du véhicule. L'arbre d'entraînement 12 a une première extrémité, ici l'extrémité avant, accouplée à un arbre de sortie du groupe motopropulseur du véhicule 2, lequel n'est pas représenté mais connu en soi. L'organe de transmission 5 comprend également une bride d'interface 14 qui est, lorsque l'organe de transmission 5 est monté sur le véhicule 2, interposée entre l'arbre d'entraînement 12 et la bride d'entrée 10, le long d'un axe X2 qui est un axe longitudinal du véhicule 2. Un cardan 122, monté à la deuxième extrémité de l'arbre 12 la plus proche du pont 6, assure la liaison cinématique entre l'arbre 12 et la bride d'interface 14. La bride d'entrée 10 permet, par le biais de la bride d'interface 14, de transmettre au pont 6 un couple moteur fourni à l'arbre d'entraînement 12 par le groupe motopropulseur du véhicule 2.

Avantageusement, le cardan 122 est également confiné dans le caisson 8 pour le protéger d'éventuelles collisions avec des éléments extérieurs.

La bride d'interface 14 a une forme cylindrique centrée sur un axe X14 qui est un axe de rotation de la bride d'interface 14, laquelle comporte un moyeu 142, ainsi qu'un ventilateur 144. Ainsi, l'organe de transmission 5 comprend le ventilateur 144 qui permet de générer un flux d'air autour du pont 6 pour refroidir le pont 6 et l'huile se trouvant à l'intérieur. Le moyeu 142 comprend un trou 146 traversant centré sur l'axe X14, de sorte à alléger la bride d'interface 14.

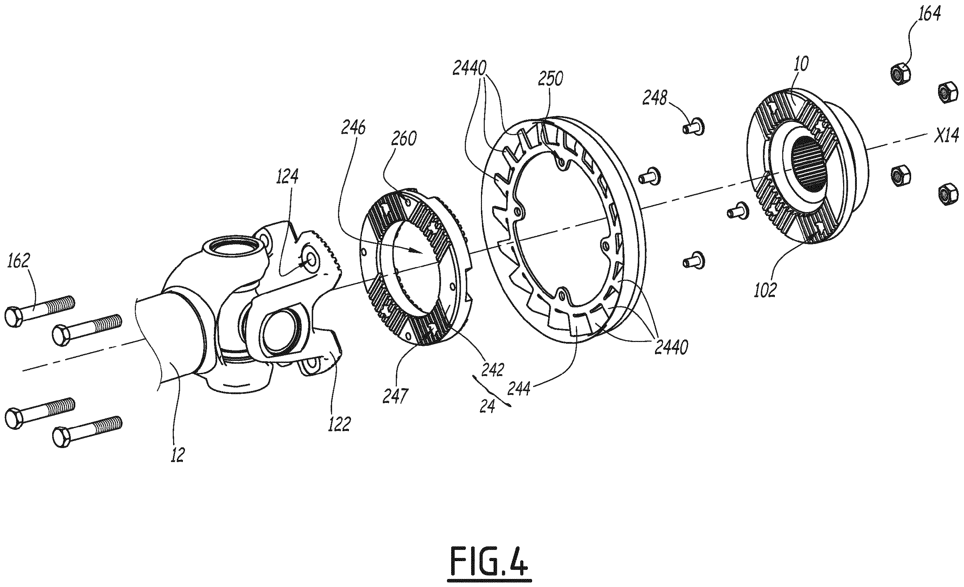

Les axes X2 et X14 sont parallèles, dans le premier mode de réalisation, comme dans ceux des figures 4 et 5.

Dans le premier mode de réalisation, le moyeu 142 et le ventilateur 144 sont fabriqués d'un seul tenant en métal, de préférence en acier, et le moyeu 142 comprend quatre perçages 147 pour la fixation de la bride d'interface 14 avec le cardan 122 et la bride d'entrée 10.

Le ventilateur 144 est formé de pales 1440 réparties autour de l'axe X14. Sur l'exemple des figures, le ventilateur 144 comprend dix-neuf pales 1440. Le fait que le nombre de pales du ventilateur est un nombre premier évite les phénomènes de résonnance et permet de limiter le bruit généré par le ventilateur 144.

Lorsque la bride d'interface 14 est montée sur le véhicule 2, l'arbre d'entraînement 12 et la bride d'entrée 10 sont globalement alignés le long de l'axe X14, au fait près que le cardan 122 permet un léger désalignement. La bride d'interface 14 se trouve alors entre l'arbre d'entraînement 12 et la bride d'entrée 10, plus précisément entre le cardan 122 et la bride d'entrée 10.

Le cardan 122 forme un accouplement entre l'extrémité de l'arbre 12 et la bride d'interface 14. Cet accouplement 122 comprend quatre perçages 124 pour la fixation de l'arbre d'entraînement 12 à la bride d'interface 14.

La bride d'entrée 10 comprend, elle aussi, quatre perçages 102 pour la fixation de la bride d'entrée 10 à la bride d'interface 14.

Pour l'assemblage de l'arbre d'entraînement 12, de la bride d'interface 14 et de la bride d'entrée 10 lorsque le pont est monté sur le véhicule 2, chaque perçage 147 est tout d'abord aligné avec l'un des perçages 102 et l'un des perçages 124. La bride d'entrée 10, la bride d'interface 14 et l'arbre d'entraînement 12 sont ensuite fixés ensemble au moyen de quatre boulons 16 comprenant chacun une vis 162 et un écrou 164. Ainsi, lorsque le pont est monté sur le véhicule 2 et que la bride d'entrée 10 et la bride d'interface 14 sont assemblées, le ventilateur 144 est solidaire de la bride d'entrée 10.

Lorsque le véhicule 2 roule, le groupe motopropulseur fournit un couple à l'arbre d'entraînement 12. Ce couple est transmis, par le biais du cardan 122 et de la bride d'interface 14, à la bride d'entrée 10 puis au pignon d'entrée du pont 6, qui est solidaire de la bride d'entrée 10. Ainsi, le ventilateur 144 est entraîné en rotation à une vitesse égale à celle de l'arbre d'entraînement 12, par exemple environ 6000 tours par minute. L'air présent autour du pont 6 est donc mis en mouvement pour circuler autour du pont 6, à l'intérieur du caisson de protection 8, et refroidir l'huile se trouvant à l'intérieur du pont 6. Cela permet de pouvoir faire fonctionner le véhicule 2 à sa vitesse maximum sans altérer les qualités de l'huile et, donc, sans endommager le véhicule.

L'invention est d'autant plus intéressante que certains véhicules tels que des véhicules militaires sont équipés d'un plancher renforcé qui présente des caissons 13, représentés en pointillés sur la figure 1, de part et d'autre de l'arbre d'entraînement 12, ce qui limite la circulation d'air naturelle vers le pont 6 lorsqu'un tel véhicule se déplace vers l'avant. La présence du ventilateur 144 permet de compenser ce défaut de ventilation naturelle.

Dans le deuxième mode de réalisation d'une bride d'interface 24 représenté sur la figure 4, les éléments analogues à ceux du premier mode de réalisation portent les mêmes références et fonctionnent de la même façon. Dans ce qui suit, on décrit principalement les différences entre le deuxième mode de réalisation et le premier.

Dans le deuxième mode de réalisation, la bride d'interface 24 comprend un moyeu 242 et un ventilateur 244. Le ventilateur 244 et le moyeu 242 sont deux pièces distinctes, contrairement au premier mode de réalisation. Le moyeu 242 comprend un trou traversant 246 pour alléger la bride d'interface. Le ventilateur 244 et le moyeu 242 sont solidarisés au moyen de quatre vis 248 passant dans quatre trous 250 traversant le ventilateur 244 et dans quatre trous 260 percés dans le moyeu 242. Comme dans le premier mode de réalisation, le moyeu 242 comprend également quatre perçages 247 pour la fixation de la bride d'interface 24 à l'arbre d'entraînement 12 et à la bride d'entrée 10.

Pour l'assemblage de la bride d'interface 24 avec l'arbre d'entraînement 12 et la bride d'entrée 10, le ventilateur 244 est tout d'abord fixé, à l'aide des quatre vis 248, au moyeu 242. La bride d'interface 24, alors assemblée, est ensuite positionnée entre l'arbre d'entraînement 12 et la bride d'entrée 10 et ces trois éléments sont assemblés de la même manière que dans le premier mode de réalisation.

Dans le deuxième mode de réalisation, le moyeu 242 et le ventilateur 244 de la bride d'interface 24 sont également fabriqués en métal, de préférence en acier.

En variante non-représentée de l'invention, le ventilateur 244 de la bride d'interface 24 est fabriqué dans un autre matériau, tel qu'un polymère, ou tel qu'un matériau composite, de préférence un polymère renforcé de fibres.

Dans le deuxième mode de réalisation, les pales 2440 du ventilateur 144 sont également au nombre de dix-neuf.

En variante, et quel que soit le mode de réalisation, le ventilateur 144 ou 244 comprend un nombre de pales 1440 ou 2440 différent, entre trois et cent pales. De préférence, le nombre de pales est compris entre sept et cinquante, de préférence encore, le nombre de pales est compris entre onze et trente. De préférence, le nombre de pales du ventilateur 144 ou 244 est un nombre premier.

En variante, la bride d'interface 14 ou 24 est assemblée avec l'arbre d'entraînement 12 et avec la bride d'entrée 10 par des moyens autres que des boulons, par exemple, des rivets, cannelures ou anneaux élastiques.

Les modes de réalisation et les variantes mentionnés ci-dessus peuvent être combinés entre eux pour former de nouveaux modes de réalisation de l'invention.

## Revendications

1. Organe de transmission de mouvement (5), destiné à être monté sur un véhicule (2) et à relier un pont (6) du véhicule et un arbre d'entraînement (12) du véhicule, l'organe de transmission de mouvement comprenant une bride d'entrée (10) destinée à être reliée à l'arbre d'entraînement (12) du véhicule, **caractérisé en ce que** l'organe de transmission de mouvement (5) comprend une bride d'interface (14 ; 24) comprenant un ventilateur (144 ; 244), la bride d'interface étant destinée à être fixée à la bride d'entrée (10) et interposée entre l'arbre d'entraînement (12) et la bride d'entrée (10) lorsque l'organe de transmission (5) est monté sur le véhicule (2), de sorte que, lorsque la bride d'entrée est reliée à l'arbre d'entraînement (12), le ventilateur tourne avec une vitesse de rotation proportionnelle à la vitesse d'avancement du véhicule.

2. Organe de transmission de mouvement (5) selon la revendication 1, **caractérisé en ce que** la bride d'interface (14) est fabriquée d'un seul tenant.

3. Organe de transmission de mouvement (5) selon la revendication 1, **caractérisé en ce que** la bride d'interface (24) comprend un moyeu (242) et le ventilateur (244), fixés ensemble par des moyens de fixations, préférentiellement des vis (248).

4. Organe de transmission de mouvement (5) selon l'une quelconque des revendications précédentes, **caractérisé en ce que** le ventilateur (144 ; 244) comprend un nombre de pales (1440 ; 2440) compris entre 3 et 100, de préférence entre 7 et 50, de préférence encore entre 11 et 30.

5. Organe de transmission de mouvement (5) selon la revendication 4, **caractérisé en ce que** le nombre de pales (1440 ; 2440) est un nombre premier.

6. Organe de transmission de mouvement (5) selon l'une quelconque des revendications précédentes, **caractérisé en ce que** le ventilateur (144 ; 244) est en métal, préférentiellement en acier.

7. Organe de transmission de mouvement (5) selon l'une quelconque des revendications 1 à 5, **caractérisé en ce que** le ventilateur (244) est en matériau polymère.

8. Organe de transmission de mouvement (5) selon l'une quelconque des revendications 1 à 5, **caractérisé en ce que** le ventilateur (244) est en matériau composite, préférentiellement en polymère renforcé de fibres.

9. Véhicule (2) comprenant un arbre d'entraînement (12) et un pont (6), reliés par un organe de transmission de mouvement (5), caractérisé en ce l'organe de transmission de mouvement (5) est selon l'une quelconque des revendications précédentes.

10. Véhicule selon la revendication 9, **caractérisé en ce que** l'organe de transmission de mouvement (5) et le pont (6) sont confinés dans un caisson (8) de protection, et **en ce que**, de préférence, l'arbre d'entraînement (12), le pont (6) et l'organe de transmission de mouvement (5) sont disposés sous une caisse du véhicule (2).
